# EUROPÄISCHE PATENTSCHRIFT

(11) **EP 1 129 139 B1**
(45) Veröffentlichungstag und Bekanntmachung des Hinweises auf die Patenterteilung: **05.06.2002**
(21) Anmeldenummer: 99958014.5
(22) Anmeldetag: 09.11.1999
(51) Int. Cl.: C08L 97/00, C08L 93/02

(54) **ZUSAMMENSETZUNG ZUR HERSTELLUNG VON FORMKÖRPERN UND VERFAHREN ZUR HERSTELLUNG VON FORMKÖRPERN AUS EINER SOLCHEN ZUSAMMENSETZUNG**
COMPOSITION FOR THE PRODUCTION OF SHAPED BODIES AND METHOD FOR THE PRODUCTION OF SHAPED BODIES MADE OF SAID COMPOSITION
COMPOSITION POUR LA PRODUCTION DE CORPS MOULES ET PROCEDE DE PRODUCTION DE CORPS MOULES A PARTIR DE LADITE COMPOSITION

(30) Priorität: 11.11.1998 DE 19852034
(43) Veröffentlichungstag der Anmeldung: 05.09.2001
(73) Patentinhaber: FRAUNHOFER-GESELLSCHAFT ZUR FÖRDERUNG DER ANGEWANDTEN FORSCHUNG E.V., 80636 München (DE); Tecnaro Gesellschaft zur Industriellen Anwendung Nachwachsender Rohstoffe mbH, 99817 Eisenach (DE)
(72) Erfinder: NÄGELE, Helmut, D-76327 Pfinztal (DE); PFITZER, Jürgen, D-76327 Pfinztal (DE); INONE, Emilia, D-76327 Pfinztal (DE); EYERER, Peter, D-76228 Karlsruhe (DE); EISENREICH, Norbert, D-76327 Pfinztal (DE); ECKL, Wilhelm, D-76133 Karlsruhe (DE)
(86) Internationale Anmeldenummer: EP9908593
(87) Internationale Veröffentlichungsnummer: WO0027924

(56) Entgegenhaltungen:
- US-A- 2 707 686

## Beschreibung

Die Erfindung betrifft eine Zusammensetzung zur Herstellung von Formkörpern sowie ein Verfahren zur Herstellung von Formkörpern aus einer solchen Zusammensetzung.

Durch die Förderung von Mineralölen und deren thermische Verwertung zur Energiegewinnung bzw. deren Synthese zu Kunststoffen steigt der Kohlendioxidgehalt (CO₂) in der Erdatmosphäre stetig an. Der steigende CO₂-Gehalt in der Atmosphäre wird zum Teil für den globalen Treibhauseffekt und die daraus resultierenden Klimaverschiebungen auf der Erde mitverantwortlich gemacht. Um die Akkumulation von CO₂ in der Atmosphäre eindämmen zu können, ist es notwendig, den CO₂-Kreislauf zu schließen. Dies bedeutet, daß nur soviel CO₂ in einem bestimmten Zeitraum in die Atmosphäre abgegeben werden sollte, wie die Natur in dem selben Zeitraum in der Lage ist, dieses durch Photosynthese wieder neu in organische Feststoffe zu überführen. An synthetisch aus Erdöl gewonnenen Kunststoffen ist das Gegenteil deutlich zu demonstrieren. Werkstoffe aus synthetischen Kunststoffen können nach ihrem Nutzungszeitraum nicht CO₂-neutral entsorgt werden, da mehr Kunststoffabfälle verbrannt werden, als Erdöl für die erneute Synthese neu gebildet werden kann. Dies hat zwangsläufig eine CO₂-Akkumulation in der Atmosphäre zur Folge.

Den größten Anteil innerhalb der synthetischen Kunststoffe haben die Thermoplaste. Diese werden auf Extrudern, Spritzgießmaschinen oder Warmformpressen unter Energieeinwirkung entweder in Form von Wärme oder von Friktion in einen plastischen Zustand überführt und in Matrizen oder Werkzeugen zum gewünschten Formteil urgeformt. Gelänge es nun einen Werkstoff zu generieren, der ausschließlich aus schnell nachwachsenden Rohstoffen gewonnen und außerdem auf herkömmlichen thermischen Umformmaschinen zu verarbeiten ist, ergäbe sich eine in ökologischer und ökonomischer Hinsicht wesentlich günstigere Bilanz.

Aus der Natur sind eine Reihe von Werkstoffen bekannt, die für solche Anwendungen geeignet wären. Hierzu gehören insbesondere die Polysaccharide (Cellulose, Stärke), die Proteine oder die Lignine. Die genannten Polymere sind allerdings nicht ohne weiteres thermisch formbar, so daß bei Werkstoffen, die aus Gründen der Formstabilität mit Fasern, z.B. Cellulosefasern, verstärkt sein müssen, ein natürliches Verarbeitungshilfsmittel zugesetzt werden muß. Als ein solches Verarbeitungshilfsmittel hat sich erfindungsgemäß Schellack erwiesen. Schellack wird von der Laus "Kerria lacca" zum Schutz des Geleges gegen äußere Witterungseinflüsse produziert und ist bei Temperaturen um etwa 80°C schmelzbar. Die guten filmbildenden Eigenschaften von Schellack tragen zu günstigen Verarbeitungseigenschaften der Mischung mit Naturfasern auf Extrudern, Spritzgießmaschinen oder Pressen bei.

Als weiteres thermoplastisches Bindemittel für Naturfasern kommt erfindungsgemäß Lignin aus den unterschiedlichsten Zellstoffaufschlußverfahren zum Einsatz. Das nur sehr gering ausgeprägte thermoplastische Verhalten von Lignin nach dem Zellstoffaufschluß reicht jedoch nicht aus, um es alleine mit Naturfasern zu einem thermoplastischen Compound formulieren zu können.

Erst eine Kombination aus den Komponenten Naturfaser, z.B. Cellulose (als Verstärkungs- oder Füllstoff), Lignin (als Bindemittel für die Faser) und Schellack (als Verarbeitungshilfsmittel) ergibt verarbeitungsfähige Compounds mit guten mechanischen und thermischen Eigenschaften, welche zu 100% aus nachwachsenden Rohstoffen formuliert und für technologisch hochwertige Anwendungen geeignet sind.

US-A-2 707 686 offenbart Form-Pulver umfassend Holzfasern, Schellack und Bhilawan- Harz.

Gegenüber bekannten Versuchen mit Zusammensetzungen aus überwiegend natürlichen Komponenten (EP 0 720 634) bietet die erfindungsgemäße Zusammensetzung gemäß den Patentansprüchen folgende Vorteile:
- Compounds aus 100% nachwachsenden Rohstoffen (geschlossener CO₂-Kreislauf),
- Direktverarbeitung von rieselfähigen Mischungen (keine thermischen Vorstufen für die Erzeugung der Mischung, was zu einer Schonung der Mischungskomponenten sowie einer geringeren Geruchsemission durch geringere Anteile von Spaltprodukten führt).
- Kalte Kompaktierung bei schlecht rieselfähigen Mischungen (keine thermische Beaufschlagung, was zu einer Schonung der Mischungskomponenten sowie einer geringeren Geruchsemission durch geringere Anteile an Spaltprodukten führt),
- keine Proteine (preisgünstigere Compounds, verringerte Gefahr der Schimmelbildung der Compounds bzw. der Formteile),
- kein Einsatz von Säure (geringerer Verschleiß der Verarbeitungsmaschine bzw. der Werkzeuge),
- kein Gylkol oder Glycerin (keine gesundheitsbedenklichen Emissionen während der Verarbeitung),
- sämtliche Lignine aus allen Zellstoffaufschlußverfahren sind einsetzbar (Ligninsulfonate, Kraftlignin, Organosolvlignin, Aquasolvlignin, ...),
- niedrigere Verarbeitungstemperaturen durch Schellack möglich (keine thermische Beaufschlagung, was zu einer Schonung der Mischungskomponenten sowie einer geringeren Geruchsemission durch geringere Anteile an Spaltprodukten führt).

Überall dort, wo Kunststoffe oder natürlich gewachsenes Holz in Formteilen oder Werkstücken zum Einsatz kommen, können die rieselfähigen Pulvermischungen gemäß der Erfindung oder die kaltverpreßten Granulate aus Cellulosefasern oder -mehl mit Lignin und Schellack zum Einsatz kommen, z.B. in der Automobil-, Bau-, Möbel-, Verpackungs- oder Elektronikindustrie.

### Beispiele

1. Es werden pulverförmiges Lignin, Holzfasern und Schellack mechanisch zu einer homogenen Mischung verarbeitet. Dabei beträgt der Anteil an Lignin 45%, der Anteil an Holzfasern 50% und der Anteil an Schellack 5%. Alle Komponenten liegen pulver- oder faserförmig vor, so daß eine homogene Vormischung möglich ist. Die rieselfähige Mischung wird anschließend auf eine Spritzgießmaschine aufgegeben und zu einem Formteil umgeformt.
2. Für den Fall, daß die Vormischung wegen schlechter Rieselfähigkeit nicht unmittelbar auf eine Spritzgießmaschine oder einen Extruder aufgegeben werden kann, wird sie zuvor nach dem Verfahrensprinzip der Pressagglomeration in rieselfähige Pellets überführt. Die Pellets werden anschließend auf eine Spritzgießmaschine, einen Extruder oder eine Warmformpresse aufgegeben, plastifiziert und zum Formteil ausgeformt.

## Patentansprüche

1. Zusammensetzung zur Herstellung von Formkörpern, bestehend aus polymerem Lignin, Schellack und Naturfasern.

2. Zusammensetzung nach Anspruch 1, **gekennzeichnet durch** Lignin aus herkömmlichen Zellstoffaufschlußverfahren, wie Ligninsulfonaten, Kraftlignin, Organosolvlignin oder Aquasolvlignin.

3. Zusammensetzung nach Anspruch 1 oder 2, **dadurch gekennzeichnet, daß** sie aus bis zu 80% Lignin, bis zu 80% Naturfasern und bis zu 70% Schellack besteht.

4. Zusammensetzung nach einem der Ansprüche 1 bis 3, **dadurch gekennzeichnet, daß** sie aus etwa 45% Lignin, 50% Holzfasern und 5% Schellack besteht.

5. Zusammensetzung nach einem der Ansprüche 1 bis 4, **dadurch gekennzeichnet, daß** pulverförmiges Lignin und pulverförmiger Schellack mit Naturfasern als Kurzschnitte und/oder in mehlartiger Konsistenz gemischt sind.

6. Zusammensetzung nach einem der Ansprüche 1 bis 5, **dadurch gekennzeichnet, daß** die Naturfasern eine Abmessung zwischen 10µm und 10.000µm aufweisen.

7. Zusammensetzung nach einem der Ansprüche 1 bis 6, **dadurch gekennzeichnet, daß** die Mischung aus pulverförmigem Lignin und Schellack sowie geschnittenen Naturfasern zu granulatförmigen Formkörpern als Zwischenprodukt verpreßt sind.

8. Verfahren zur Herstellung von Formkörpern aus einer Zusammensetzung nach einem der Ansprüche 1 bis 7, **dadurch gekennzeichnet, daß** die trockene Mischung thermisch plastifiziert und im plastischen Zustand zu dem Formkörper verarbeitet wird.

9. Verfahren nach Anspruch 8, **dadurch gekennzeichnet, daß** der trockenen Mischung vor oder während des thermischen Plastifizierens Gleitmittel aus nativen Ölen zugegeben werden.

10. Verfahren nach Anspruch 8 oder 9, **dadurch gekennzeichnet, daß** der Formkörper durch Extrudieren hergestellt wird.

11. Verfahren nach Anspruch 8 oder 9, **dadurch gekennzeichnet, daß** der Formkörper durch Heißpressen hergestellt wird.

## Claims

1. Composition for the production of shaped bodies which comprises polymer lignin, shellac and natural fibres.

2. Composition according to claim 1, **characterised by** lignin produced by conventional chemical pulping methods, such as lignin sulphonates, kraft lignin, organosolv lignin or Aquasolv lignin.

3. Composition according to claim 1 or 2, **characterised in that** it comprises up to 80% lignin, up to 80% natural fibres and up to 70% shellac.

4. Composition according to one of claims 1 to 3, **characterised in that** it comprises roughly 45% lignin, 50% wood fibres and 5% shellac.

5. Composition according to one of claims 1 to 4, **characterised in that** powdered lignin and powdered shellac are mixed with natural fibres as short cut products and/or in a floury consistency.

6. Composition according to one of claims 1 to 5, **characterised in that** the natural fibres have a measurement of between 10 mm and 10,000 mm.

7. Composition according to one of claims 1 to 6, **characterised in that** the mixture of powdered lignin and shellac and cut natural fibres is pressed into shaped bodies in granulate form as an intermediate product.

8. Method of producing shaped bodies from a composition according to one of claims 1 to 7, **characterised in that** the dry mixture is thermally plasticised and is processed into the shaped body in the plastic state.

9. Method according to claim 8, **characterised in that** lubricants formed from native oils are added to the dry mixture before or during the thermal plasticising.

10. Method according to claim 8 or 9, **characterised in that** the shaped body is produced by extrusion.

11. Method according to claim 8 or 9, **characterised in that** the shaped body is produced by hot pressing.

## Revendications

1. Composition pour la production de corps moulés, constituée de lignine polymère, de gomme-laque et de fibres naturelles.

2. Composition selon la revendication 1,
**caractérisée par**
de la lignine provenant de procédés habituels de décomposition de cellulose, comme les ligninesulfonates, la lignine « Kraft », la lignine « organosolve » ou la lignine « aquasolve ».

3. Composition selon les revendications 1 ou 2,
**caractérisée en ce qu'**
elle se compose d'une proportion allant jusqu'à 80 % de lignine, jusqu'à 80 % de fibres naturelles et jusqu'à 70 % de gomme-laque.

4. Composition selon l'une des revendications 1 à 3,
**caractérisée en ce qu'**
elle se compose d'environ 45 % de lignine, 50 % de fibres de bois et 5 % de gomme-laque.

5. Composition selon l'une des revendications 1 à 4.
**caractérisée en ce qu'**
on mélange la lignine pulvérulente et la gomme-laque pulvérulente avec des fibres naturelles coupées court et/ou à consistance de farine.

6. Composition selon l'une des revendications 1 à 5,
**caractérisée en ce que**
les fibres naturelles ont une dimension comprise entre 10 µm et 10 000 µm.

7. Composition selon l'une des revendications 1 à 6,
**caractérisée en ce qu'**
on presse le mélange de lignine et de gomme-laque pulvérulentes ainsi que de fibres naturelles coupées pour obtenir des corps moulés en forme de granulés comme produit intermédiaire.

8. Procédé de production de corps moulés faits d'une composition selon l'une des revendications 1 à 7,
**caractérisé en ce qu'**
on plastifie par un moyen thermique le mélange sec, et on le transforme en corps moulé à l'état plastique.

9. Procédé selon la revendication 8,
**caractérisé en ce qu'**
on ajoute au mélange sec, avant ou pendant la plastification thermique, un lubrifiant constitué d'huiles naturelles.

10. Procédé selon la revendication 8 ou 9,
**caractérisé en ce qu'**
on produit le corps moulé par extrusion.

11. Procédé selon la revendication 8 ou 9,
**caractérisé en ce qu'**
on produit le corps moulé par un pressage à chaud.
